# EUROPEAN PATENT SPECIFICATION

(11) **EP 2 501 502 B1**
(45) Date of publication and mention of the grant of the patent: **01.06.2016**
(21) Application number: 10777042.2
(22) Date of filing: 19.11.2010
(51) Int. Cl.: B09C 1/10, B09C 1/00, C02F 3/34

(54) **METHOD FOR THE CLEANUP OF CONTAMINATED SITE/SEDIMENTS**
VERFAHREN ZUM REINIGEN VON KONTAMINIERTEN ORTEN/SEDIMENTEN
PROCÉDÉ DE DÉPOLLUTION DE SITES/SÉDIMENTS CONTAMINÉS

(30) Priority: 19.11.2009 US 262809 P; 30.04.2010 US 329835 P
(43) Date of publication of application: 26.09.2012
(73) Proprietor: Institut De Recherche Pour Le Développement I.R.D., 13572 Marseille Cedex 02 (FR); Institut National Sciences Appliquees Technologie, Tunis 1080 (TN)
(72) Inventor: OLLIVIER, Bernard, F-13360 Roquevaire (FR); FARDEAU, Marie-Laure, F-13170 Les Pennes (FR); BEN HANIA, Wajdi, Ariana 2073 (TN); GHODBANE, Ramzi, Ras Jabel 7070 (TN); HAMDI, Moktar, Tunis 1020 (TN)
(74) Representative: Bourgouin, André
(86) International application number: PCT/EP2010/067848
(87) International publication number: WO 2011/061300

(56) References cited:
- WO-A1-03/093179
- WO-A1-2004/046367
- WO-A2-02/06503
- FR-A1- 2 916 437
- US-A- 6 080 572
- US-B1- 6 656 722
- NESBO ET AL.: APPLIED AND ENVIRONMENTAL MICROBIOLOGY, vol. 72, no. 7, July 2006 (2006-07), pages 5061-5068,

## Description

The present invention relates to a method for the cleanup of contaminated site/sediments.

The groundwater, soil, sediments and aquifers contaminated by heavy metals, by halogenated aromatic compounds, such as polychlorobenzoates, monochlorophenol, polychlorophenols, polychlorobiphenyl (PCB) compounds, or by phosphogypsum, known as causing serious environmental problems. Among all kinds of decontamination methods developed up to now, bioremediation is the one that is studied the most widely, since it is an environmentally friendly and cost-effective alternative to physico-chemical cleanup options. Bioremediation can be defined as any process that uses prokaryotes, fungi, green plants or their enzymes to return the natural environment altered by contaminants to its original condition. However, the strategy and outcome of bioremediation in open systems or confined environments depend on a variety of physico-chemical and biological factors that need to be assessed and monitored. In particular, the choice of microorganisms is a key player in bioremediation applications.

The document WO-A1-2004/046367 discloses a prior art method for the cleanup of sites or sediments.

In the prior art, there is already the description of bioremediation of sites/sediments polluted by heavy metals, by halogenated aromatic compounds, such as polychlorobenzoates, or monochlorophenol, or polychlorophenols, or polychlorobiphenyl (PCB) compounds, or by phosphogypsum by pure cultures of anaerobic bacteria. However, up to now, there is not yet a proved efficient method to biologically entirely degrade pollutants containing heavy metals, or halogenated aromatic compounds, such as polychlorobenzoates, or monochlorophenol, or polychlorophenols, or polychlorobiphenyl (PCB) compounds, or phosphogypsum, notably by a pure bacterial culture under anaerobic conditions. One of the reasons is that many bacteria can not tolerate some extremely severe physico-chemical conditions, such as high arsenic or halogenated aromatic [e.g.chlorophenolic, polychlorobiphenyl compounds (PCB)] and sulfur compounds (e.g. sulfide) levels in contaminated sites or sediments which could be toxic for most of bacteria.

Members of the order *Thermotogales* comprise six genera, *Thermotoga, Thermosipho, Fervidobacterium, Petrotoga, Geotoga, Marinitoga* and *Kosmotoga.* They are recognized as anaerobic heterotrophic microorganisms ranging from thermophiles (e.g. *Petrotoga* spp.) to hyperthermophiles *(Themotoga* spp.) which produce acetate as the major end-product of sugar metabolism (Reysenbach, The Prokaryotes (eds Boone, D.R. & Castenholz, R.W.) 369-370 (Springer, New York, 2001)). They inhabit hot ecosystems within the planet including shallow or deep hydrothermal vents, terrestrial hot springs, hot digesters together with oilfield ecosystems.

On the basis of both phylogenetic and whole-genome analysis, the hyperthermophile, *Thermotoga maritima* within this order was shown to belong to a slowly evolving lineage thus suggesting its deep phylogenetic position together with that of its closest relatives of the *Thermotogales* within the bacterial domain (Winker and Woese Syst Appl Microbiol 13, 161-165 (1991)). However the deep position of *Thermotogales,* in the phylogenetic tree still remains as a matter of debate and has been again questioned recently by Zhaxybayeva et al. (PNAS 106, 5865-5870 (2009)) with the availability of whole genomes of *Thermotogales* (*Thermotoga petrophila, T. lettingae, Thermosipho melaniensis,* and *Fervidobacterium nodosum*). While 16S rDNA sequences analysis congruently place *Thermotogales* as a sister group of *Aquificales,* studies on the majority of genes of these anaerobes rather indicated close relationships with *Archaea* and Firmicutes Division, *Clostridia* Class, domain *Bacteria* (Zhaxybayeva et al. PNAS 106, 5865-5870 (2009)). Interestingly, *Thermotogales* 16S rRNA genes sequences have also been retrieved from many low temperature terrestrial environments, including sediments or reactors, contaminated by pollutants such as polychlorinated compounds, dimethyl phthalate, or enriched with volatile fatty acids, or in subterrestrial environments, for example mesothermic Alaskan petroleum reservoir (Nesbo et al., Appl. Environ. Microbiol. 72, 5061-5068 (2006) ; Liang et al. J. Appl. Microbiol. 106, 296-305 (2009); Pham et al., Environ. Microbiol. 11, 176-187 (2009)). This suggests that *Thermotogales* should also comprise mesophilic microorganisms.

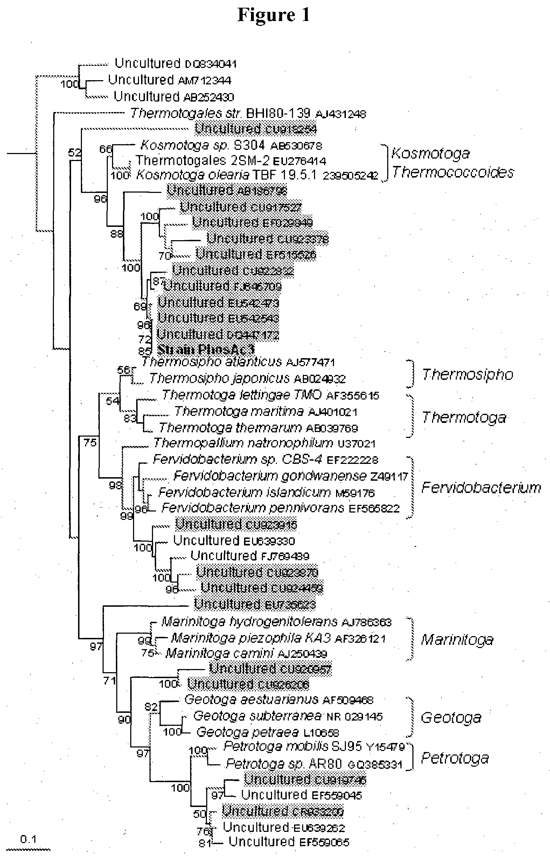

With the aim to look for sulfate-reducing bacteria growing in a continuous stirred tank reactor (CSTR) inoculated with sediments of phosphogypsum by-products deposits, then fed with a mixture of lactoserum and phosphogypsum known as containing sulfur compounds (e.g. elemental sulfur and sulfate), and incubated at 37°C (final pH=8), the Inventors , surprisingly isolated a mesophilic microbe strain PhosAc3, which can grow from 30°C up to 55°C. This strain pertains to the putative *Mesotoga* lineage within the *Thermotogales* (Figure 1). Despite isolation of strain PhosAc3 was performed on culture medium containing acetate as energy source and sulfate as terminal electron acceptor, in the presence of 0.1 g/L yeast extract, in this culture medium, the isolate was shown to use only yeast extract and acetate as carbon source in this medium, acetate being crucial for its anabolism (absence of growth in any condition in the absence of acetate as carbon source). NaCl was not required for growth of this microbial strain, since it can thrive in culture medium containing from 0 to 30 g/L NaCl. The optimum NaCl level is 2g/L.

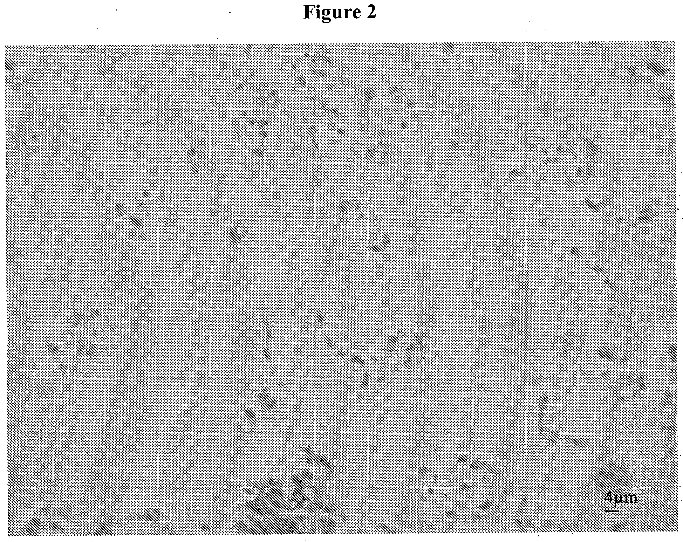

Cells of strain PhosAc3 were pleomorphic with rod to coccoid cells occuring mainly in chains that similarly to members of the *Thermotogales* (e.g. *Thermotoga* and *Thermosipho* spp.) are surrounded by a sheath-like structure (Figure 2) and stained Gram-negative. Spheroids occurred also quite often terminally as already observed in *Fervidobacterium nodosum* (Patel et al. Arch. Microbiol. 141,63-69 (1985)), another member of the latter order.

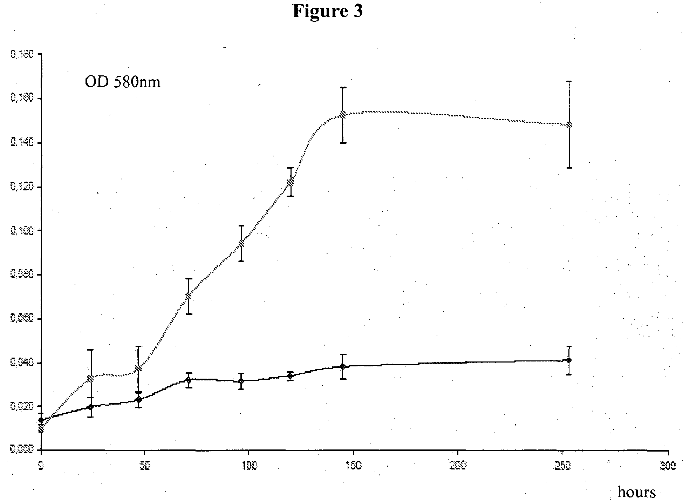

Strain PhosAc3 like the other *Thermotogales,* was shown to reduce elemental sulfur, which significantly improved its growth from complex organic matter (e.g. yeast extract + lactate) (Figure 3, the line with squares), but not sulfate, thiosulfate, nitrate, and nitrite. In the presence of elemental sulfur as terminal electron acceptor, strain PhosAC3 oxidized lactate, fructose, but also halogenated aromatic compounds including chlorophenolic compounds, such as 2-chlorophenol, 3-chlorophenol or 4-chlorophenol, polychlorophenols, chlorobenzoate, polychlorobenzoates or polychlorobiphenyl (PCB) compounds. Strain PhosAc3 can also tolerate Arsenic (III) at up to ImM.

All phenotypic, phylogenetic, genetic, and metabolic features of strain PhosAc3 clearly indicate that this strain should be placed within the order *Thermotogales* (Figure 1), as its only mesophilic representative within the « *Mesotoga* » lineage.

Consequently an object of the instant invention is a method for the cleanup of sites/sediments contaminated by heavy metals, or by halogenated aromatic compounds, or phosphogypsum, comprising treating the sites/sediments or phosphogypsum by anaerobic mesophilic bacteria (*Mesotoga lineage*) belonging to the order of *Thermotogales* in accordance with claim 1.

According to the present disclosure, an halogenated aromatic compound is chosen from chlorophenolic compounds, such as 2-chlorophenol, 3-chlorophenol or 4-chlorophenol, polychlorophenols, chlorobenzoate, polychlorobenzoates or polychlorobiphenyl (PCB) compounds.

The expression "lineage" is defined as a sequence of species each of which is considered to have evolved from its predecessor.

In the present invention, *Mesotoga* lineage signifies a group of anaerobic mesophilic bacteria consisting of a common ancestor and all its descendants, carrying out the same metabolism process as that of their representative, for example the strain PhosAc3.

According to the present disclosure, heavy metals essentially include As, Cd, Co, Cr, Cu, Hg, Mn, Ni, Pb, Sn and Tl.

The expression "phosphogypsum" refers to the gypsum formed as a by-product of processing phosphate ore into fertilizer with sulfuric acid.

In an advantageous mode of realisation, the anaerobic mesophilic bacterium is the bacterial strain CNCM 1-4238 deposited at Collection Nationale de Cultures de Microorganismes (CNCM) on November 3, 2009 or mutant there of.

Mutants of strain CNCM 1-4238 can be produced by any conventional method, for example mutagenesis by UV or X-ray radiation, by chemical mutagen such as ethyl methane sulfonate (EMS), methyl methane sulfonate (MMS), or site-directed mutagenesis by PCR.

According to a preferred embodiment of the invention, the treatment by the *Mesotoga* lineage can be carried out at the temperature ranged from 25° to 55°C, particularly from 30°C to 40°C.

According a preferred embodiment of to the invention, the treatment can be carried out in the presence of a chemical electron acceptor or a biological electron acceptor, and an electron donor.

Particularly, the biological electron acceptor can be hydrogenotrophic methanoarchaea or hydrogenotrophic sulfate-reducing bacteria.

A hydrogenotrophic sulfate-reducing bacteria can be chosen from *Desulfovibrio* spp.

A hydrogenotrophic methanoarchaea can be chosen from *Methanobacterium* spp.

Particularly, the chemical electron acceptor can be elemental sulfur.

According to a preferred embodiment of the invention, the electron donor can be chosen from lactate, fructose, halogenated aromatic compounds including chlorophenolic compounds, such as 2-chlorophenol, 3-chlorophenol or 4-chlorophenol, polychlorophenols, chlorobenzoate, polychlorobenzoates or polychlorobiphenyl (PCB) compounds

When the method according to the invention is carried out for the cleanup of sites/sediments contaminated by heavy metals, such as As, Cd, Co, Cr, Cu, Hg, Mn, Ni, Pb, Sn or Tl, and if they behave as electron acceptors, the treatment is carried out in the presence of a chemical electron donor, such as lactate, fructose, halogenated aromatic compounds including chlorophenolic compounds, such as 2-chlorophenol, 3-chlorophenol or 4-chlorophenol, polychlorophenols, chlorobenzoate, polychlorobenzoates or polychlorobiphenyl (PCB) compounds. Possible oxidation of these heavy metals as electron donors can be also performed in the presence of elemental sulfur, hydrogenotrophic methanoarchaea or hydrogenotrophic sulfate-reducing bacteria considered as terminal chemical (elemental sulfur) or biological electron acceptors (methanoarchaea and sulfate-reducing bacteria).

According to the invention, the anaerobic mesophilic bacteria (*Mesotoga* lineage) can tolerate up to 1 mM Arsenic (III).

An other object of the present disclosure is anaerobic mesophilic bacteria *(Mesotoga* lineage) chosen from the species belonging to the order of *Thermotogales,* in particular the bacterial strain CNCM I-4238 deposited at Collection Nationale de Cultures de Microorganismes (CNCM) on November 3, 2009 and similar phylogenetic relatives within the *Mesotoga* lineage.

Another object of the present disclosure is a method for isolating a bacterial strain, capable of cleaning up site/sediments contaminated by heavy metals, or polychlorobenzoates, or chlorobenzoate, or monochlorophenol, or polychlorophenols, or polychlorobiphenyl (PCB) compounds, or by phosphogysum, said method comprising:
a) cultivating a bacterial containing sample in anaerobic condition, at a temperature ranged from 25°C to 55°C, in a culture medium containing yeast extract and acetate as growth factors, an electron donor, and a chemical or biological electron acceptor, the NaCl concentration in the culture medium being comprised from 0-30g/L, eventually performing a series of dilution of the sample,
b) spreading the sample in a recipient containing the same culture medium as used in step a), the recipient being incubated at a temperature ranged from 25°C to 55°C, in anaerobic condition,
c) isolating the single colony formed on the recipient.

Particularly, a recipient can be a Petri dish or a Hungate tube.

According to the present disclosure, the electron donor can be chosen from lactate, fructose, halogenated aromatic compounds including chlorophenolic compounds, such as 2-chlorophenol, 3-chlorophenol or 4-chlorophenol, polychlorophenols, chlorobenzoate, polychlorobenzoates or polychlorobiphenyl (PCB) compounds.

According to the present disclosure, the biological electron acceptor can be hydrogenotrophic methanoarchaea or hydrogenotrophic sulfate-reducing bacteria.

According to the present disclosure, the chemical electron acceptor can be elemental sulfur.

According to the present disclosure, the bacterial strain isolated from the up-mentioned method is the bacterial strain CNCM I-4238 deposited at Collection Nationale de Cultures de Microorganismes (CNCM) on November 3, 2009.

The following example and figures 1 to 3 illustrate the present invention.
Figure 1 illustrates SSU rRNA maximum likelihood phylogenetic tree computed by TreeFinder using, a GTR and a gamma distribution (4 categories of evolutionary rates and an estimated alpha-parameter). Numbers at nodes represent bootstrap values (BV) computed by Treefinder (100 replicates of the original dataset). For clarity only BV > 50 are shown. The names of sequences retrieved from mesophilic environments are shaded. The scale bar represents the average number of substitution per site. The strain isolated in the present disclosure is PhosAc3 (CNCM I-4238 deposited at Collection Nationale de Cultures de Microorganismes (CNCM) on November 3, 2009). The species comprised in the squiggly bracket are belonging to *Mesotoga* lineage.
Figure 2 illustrates the isolated bacterial strain PhosAc3 observed by microscope.
Figure 3 illustrates the growth of PhosAc3 at the presence or absence of elemental sulfur. The vertical axis is optical density of cell culture at 580 nm. The horizontal axis is cell culture cultivation time (hours). The line with squares represents PhosAc3 cell culture with elemental sulfur. The line with diamonds represents PhosAc3 cell culture without elemental sulfur.

### Example

### Bacterial strain

The strain PhosAc3 (CNCM 1-4238 deposited at Collection Nationale de Cultures de Microorganismes (CNCM) on November 3, 2009) was isolated in a continuous stirred tank reactor (CSTR) inoculated with a mixture of marine sediments and sludges originating from a dump and a wastewater treatment plant in Tunisia, and fed with (per liter): 500 ml lactoserum and 10 g phosphogypse, at a dilution rate of 100 ml/day. Temperature was maintained at 35°C and pH value fluctuated from 7.5 to 9.0 during experiment. Samples collected from the anaerobic reactor were stored anaerobically at 4°C until use.

Cells of strain PhosAc3 were pleomorphic with rod to coccoid cells occuring mainly in chains that similarly to members of the *Thermotogales* (e.g. *Thermotoga* and *Thermosipho* spp.) are surrounded by a sheath-like structure.

### Culture medium

The basal culture medium used for enrichment and isolation of strain PhosAc3 contained (per liter distilled water): 1 g NH4Cl, 0.3 g K2HPO4, 0.3 g KH2PO4, 0.1 g KCL, 0.5 g MgCl2 .6H2O, 0.1 g CaCl2 .2H2O, 1 g NaCl, 1 g yeast extract, 0.5 g cysteine-HCl, 4.0 g sodium sulfate, 0.16 g sodium acetate, and 10 ml Balch trace element solution (Balch et al., 1979, Microbiol Rev 43: 260-296). The pH was adjusted to 7.2 and the medium was prepared anaerobically and dispensed in Hungate tubes as previously described (Fardeau et al., 1997, Int J Syst Bacteriol 47 : 1013-1019). Enrichment culture were performed at 10% (v/v) with reactor sludge and incubated at 37°C. The culture was purified by repeated use of the roll-tubes method (Hungate, 1969, Academic Press: London, pp. 117-132).

### Dependence of elemental sulfur for the growth of PhosAc3

Two PhosAc3 cell cultures, one with 10 g/L elemental sulfur and one without elemental sulfur, are cultivated at 37°C, under anaerobic condition. Biomass in two cultures is respectively assessed after 25, 50, 75, 100, 125, 150 and 250 hours of cultivation, by the measurement of optical absorbance at 580 nm.

In the presence of elemental sulfur in the culture medium, cells of strain PhosAc3 grow more quickly than cells of the same strain growing in culture medium without elemental sulfur.

### Analyses of halogenated aromatic compounds

Analyses of halogenated aromatic compounds were realised according to the European standard EN 12673 "Water quality - Gas chromatographic determination of some selected chlorophenols in water" december 1998. This standard describes an acetylation followed by a liquid/liquid extraction and determination by gas chromatography and mass selective detection. The limit of quantification is 0,1 µg/l. The gas chromatograph system consisted of a Varian 3800 model equiped with SATURN 2000 mass detector, 1079 Injector and 8200 autosampler. The column CP-Sil 8 CB fused silica WCOT was purchased from Supelco.

### Phylogenetic analysis

The 16S rRNA gene was amplified by PCR using the bacterial primers 8F and 1492R (Lane, 1991, John Wiley and Sons: New York, pp 115-175) and the PCR product was sequenced by GATC company (Constance, Germany). Homologues of SSU PhosAc3 rRNA sequence were retrieved from the /nr/ database at the NCBI (http://www.ncb.nlm.nih.gov/) using BLASTn (Altschul et al., 1990, J Mol Biol 215: 403-410). Sequences were aligned using clustalw2 (Larkin et al., 2007, Bioinformatics 23: 2947-2948). The resulting alignments were visually inspected and refined. In addition, regions where alignment was doubtful were removed using the MUST package (Philippe, 1993, Nuc/ Acids Res 21: 5264-5272). A first phylogenetic analysis was performed using Neighbor-Joining method implemented in Phylip package (Felsenstein, 2004, PHYLIP: Phylogeny Inference Package, Version 3.6. University of Washington, Seattle, USA). The sequence from strain PhosAc3 emerged among a large cluster containing *Thermotogales* sequences, suggesting that this strain is a new representative of this bacterial order. Based on the previous analysis, a subset of 72 SSU rRNA sequences was selected. The dataset was realigned, visually inspected and cleaned again. A total of 1048 positions was conserved for SSU rRNA phylogenetic analyses using /Treefinder/ (Jobb et al., 2004, BMC Evol Biol 28: 4-18).

### Results and discussion

Here we report on identification and growth of the first representative of "mesotoga", strain PhosAc3, from an anaerobic continuous stirred tank reactor fed with lactoserum and phosphogypse, and incubated at 35°C. Colonies were obtained on roll tubes containing the basal culture medium and noble agar (1.6%) after two months of incubation at 37°C. The isolate which was shown to use only yeast extract as energy source in the basal culture medium is a bona fide mesophilic bacterium able to grow anaerobically from 30°C up to 50°C with an optimal temperature of 40°C. The ribosomal RNA sequences amplified from this strain harbour an overall G+C content of 55.97% for SSU (FN611033) that is in agreement with a mesophilic lifestyle (Boussau et al., 2008, Nature 456: 942-945). The phylogenetic analyses of rRNA support the emergence of strain PhosAc3 within Thermotogales and more precisely in a large cluster of sequences recovered from mesophilic environments (bootstrap value (BV)=100%, Figure 1). These conclusions were systematically confirmed by the analysis of the large ribosomal subunit sequence (FN611034) (data not shown).

Similarly to other Thermotogales, strain PhosAc3 cells, appearing mostly as chains, was shown to reduce elemental sulfur which significantly improved its growth (Figure 3). Therefore, both phylogenetic and metabolic features of strain PhosAc3 are in agreement to place it within the order Thermotogales, as its first mesophilic representative. Interestingly, beside its ability to oxidize lactate and fructose, this strain was shown to use chlorophenols (2-, 3-, or 4-chlorophenol) in the presence of elemental sulfur, but not sulfate or thiosulfate as terminal electron acceptors. Moreover, phenol did not accumulate during chlorophenol degradation thus suggesting that this strain may dehalogenate and attack the aryl nucleus. To our knowledge, this has never been reported to be performed under anaerobiosis by a pure culture so far (Smidt and de Vos, 2004, Annu Rev Microbiol 58: 43-73). Therefore, beside isolation of this bacterium which may help in isolating other "mesotoga", we believe that further genomic and physiological characterizations of this bacterium will help to understand (i) biological mechanisms of adaptation to thermophilic/hyperthermophilic and mesophilic lifestyles together with (ii) its peculiar ecological significance in the mesophilic environments contaminated by halogenated aromatic compounds that they inhabit.

## Claims

1. Method for the cleanup of sites or sediments contaminated by heavy metals, or by halogenated aromatic compounds, such as polychlorobenzoates, chlorobenzoate, or monochlorophenol, or polychlorophenols, or polychlorobiphenyl compounds, or phosphogypsum, comprising treating the contaminated sites or sediments by anaerobic mesophilic bacteria of *Mesotoga* lineage belonging to the order of *Thermotogales.*

2. The method according to claim 1, wherein the anaerobic mesophilic bacterium is the bacterial strain CNCM I-4238 deposited at Collection Nationale de Cultures de Microorganismes on November 3, 2009 or mutant there of.

3. The method according to any one of claims 1 to 2, wherein the treatment by the *Mesotoga* lineage is carried out at the temperature ranged from 25°C to 55°C, particularly at 30-40°C.

4. The method according to any one of claims 1 to 3, wherein the treatment is carried out in the presence of a chemical electron acceptor or a biological electron acceptor, and an electron donor.

5. The method according to claim 4, wherein the chemical electron acceptor is elemental sulfur.

6. The method according to claim 4, wherein the biological electron acceptor is hydrogenotrophic methanoarchaea or hydrogenotrophic sulfate-reducing bacteria.

7. The method according to any one of claims 4 to 6, wherein the electron donor is chosen from lactate, fructose, halogenated aromatic compounds, such as chlorophenolic compounds, 2-chlorophenol, 3-chlorophenol or 4-chlorophenol, polychlorophenols, chlorobenzoate, polychlorobenzoates or polychlorobiphenyl compounds.

8. The method according to any one of claims 1 to 7, wherein the anaerobic mesophilic bacteria of *Mesotoga* lineage can tolerate up to 1 mM Arsenic (III).

## Patentansprüche

1. Verfahren zum Reinigen von Orten oder Sedimenten, die mit Schwermetallen oder mit halogenierten aromatischen Verbindungen, wie beispielsweise Polychlorbenzoaten, Chlorbenzoat oder Monochlorphenol oder Polychlorphenolen oder Polychlorbiphenylverbindungen oder Phosphorgips, kontaminiert sind, umfassend das Behandeln der kontaminierten Orte oder Sedimente mit anaeroben mesophilen Bakterien der Mesotoga-Linie, die zur Ordnung der Thermotogales gehören.

2. Verfahren nach Anspruch 1, wobei das anaerobe mesophile Bakterium der Bakterienstamm CNCM I-4238, der bei der Collection Nationale de Cultures de Microorganismes am 3. November 2009 hinterlegt wurde, oder ein Mutant davon ist.

3. Verfahren nach Anspruch 1 oder 2, wobei die Behandlung mit der Mesotoga-Linie bei einer Temperatur im Bereich von 25 °C bis 55 °C, insbesondere bei 30 bis 40 °C durchgeführt wird.

4. Verfahren nach einem der Ansprüche 1 bis 3, wobei die Behandlung in Gegenwart eines chemischen Elektronenakzeptors oder eines biologischen Elektronenakzeptors und eines Elektronendonors durchgeführt wird.

5. Verfahren nach Anspruch 4, wobei der chemische Elektronenakzeptor Elementarschwefel ist.

6. Verfahren nach Anspruch 4, wobei der biologische Elektronenakzeptor hydrogenotrophe Methanoarchaeen oder hydrogenotrophe Sulfat-reduzierende Bakterien sind.

7. Verfahren nach einem der Ansprüche 4 bis 6, wobei der Elektronendonor ausgewählt ist aus Lactat, Fructose, halogenierten aromatischen Verbindungen, wie beispielsweise Chlorphenolverbindungen, 2-Chlorphenol, 3-Chlorphenol oder 4-Chlorphenol, Polychlorphenolen, Chlorbenzoat, Polychlorbenzoaten oder Polychlorbiphenylverbindungen.

8. Verfahren nach einem der Ansprüche 1 bis 7, wobei die anaeroben mesophilen Bakterien der Mesotoga-Linie bis zu 1 mM Arsen(III) tolerieren können.

## Revendications

1. Méthode de dépollution de sites ou de sédiments contaminés par des métaux lourds, ou par des composés aromatiques halogénés, tels que des polychlorobenzoates, du chlorobenzoate, ou du monochlorophenol, ou des polychlorophenols, ou des composés polychlorobiphenyls, ou du phosphogypse, comprenant le traitement par des bactéries mésophiles anaérobies de la lignée *Mesotoga* appartenant à l'ordre des *Thermotogales,* de sites ou de sédiments contaminés.

2. Méthode selon la revendication 1, dans laquelle la bactérie anaérobie mésophile est une bactérie de la souche CNCM I-4238 déposée à la Collection Nationale de Cultures de Microorganismes le 3 Novembre 2009 ou un mutant de celle-ci.

3. Méthode selon l'une quelconques des revendications 1 à 2, dans laquelle le traitement par la lignée *Mesotoga* est réalisé dans une plage de température de 25°C à 55°C, particulièrement à 30-40°C.

4. Méthode selon l'une quelconques des revendications 1 à 3, dans laquelle le traitement est réalisé en présence d'un accepteur d'électron chimique ou d'un accepteur d'électron biologique, et un donneur d'électron.

5. Méthode selon la revendication 4, dans laquelle l'accepteur d'électron chimique est du soufre élémentaire.

6. Méthode selon la revendication 4, dans laquelle l'accepteur d'électron biologique est constitué par des méthanoarchées hydrogénotrophiques ou des bactéries sulfato-réductrices hydrogénotrophiques.

7. Méthode selon l'une quelconques des revendications 4 à 6, dans laquelle le donneur d'électron est choisi parmi le lactate, le fructose, les composés aromatiques halogénés, tels que les composés chlorophénoliques, le 2-chlorophénol, le 3-chlorophénol ou le 4-chlorophénol, les polychlorophénols, le chlorobenzoate, les polychlorobenzoates ou les composés polychlorobiphényls.

8. Méthode selon l'une quelconques des revendications 1 à 7, dans laquelle les bactéries mésophiles anaérobies de la lignée Mesotoga peuvent tolérer jusqu'à 1 mM d'Arsenic (III).
